(19) Europäisches Patentamt
European Patent Office
Office européen des brevets

(11) Veröffentlichungsnummer: **0 008 020**
**B1**

(12) **EUROPÄISCHE PATENTSCHRIFT**

(45) Veröffentlichungstag der Patentschrift: **21.04.82**

(51) Int. Cl.³: **C 08 F 20/44**, C 08 F 2/06, C 08 F 4/40

(21) Anmeldenummer: **79102472.2**

(22) Anmeldetag: **16.07.79**

(54) **Acrylnitril enthaltende Polymere und Verfahren zu deren Herstellung.**

(30) Priorität: **28.07.78 DE 2833143**

(43) Veröffentlichungstag der Anmeldung: **20.02.80 Patentblatt 80/4**

(45) Bekanntmachung des Hinweises auf die Patenterteilung: **21.04.82 Patentblatt 82/16**

(84) Benannte Vertragsstaaten: **AT BE DE FR GB IT**

(56) Entgegenhaltungen:
**DE-B-1 264 065**
**CHEMICAL ABSTRACTS, Band 78, 1973, Nr. 6, 12. Februar, Seite 21, Zusammenfassung 30506x, Columbus, Ohio, USA**

(73) Patentinhaber: **BAYER AG, Zentralbereich Patente, Marken und Lizenzen, D-5090 Leverkusen 1, Bayerwerk (DE)**

(72) Erfinder: **Süling, Carlhans, Dr., Carl-Leverkus-Strasse 10, D-5068 Odenthal (DE)**
Erfinder: **Korte, Siegfried, Dr., Bamberger-Strasse 6, D-5090 Leverkusen 1 (DE)**
Erfinder: **Neukam, Theo, Dr., Rubensstrasse 14, D-4047 Dormagen (DE)**

**EP 0 008 020 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Acrynitril enthaltende Polymere und Verfahren zu deren Herstellung

Die Erfindung betrifft Acrylnitrilcopolymere und comonomerfreie Polyacrylnitrile mit einer gegenüber basischen Farbstoffen verbesserten Anfärbbarkeit. Sie betrifft weiter ein Verfahren zur Herstellung von Polyacrylnitril und von überwiegend Acrylnitril enthaltenden Copolymeren, durch Polymerisation in aliphatischen Kohlenwasserstoffen in Gegenwart eines Redoxkatalysator-Systems.

Bekanntlich erfolgt die Herstellung von Polyacrylnitril und überwiegend Acrylnitril enthaltenden Copolymeren, die zum Beispiel für die Verspinnung zu Fasern des Acryl- und Modacryltyps geeignet sind, oder aber als thermoplastische Werkstoffe bei der Verformung zu Folien und flaschenartigen Hohlkörpern von Bedeutung sind, überwiegend in wäßrigen Medien. Dieses Herstellungsverfahren enthält mehrere Prozeßstufen, unter anderem auch Destillationsvorgänge bei der Polymerisataufbereitung, die jedoch ein vollständiges Recycling aller Komponenten des Systems schwierig und vor allen Dingen energetisch aufwendig gestalten.

Ferner ist bei den aus wäßrigen Medien gewonnenen Acrylnitril-Polymeren zur Erzielung einer guten Anfärbbarkeit mit kationischen oder anionischen Farbstoffen die Verwendung meist ionischer Comonomerer erforderlich. Deren Anwendung führt aber häufig zu ökologischen Problemen.

Es ist auch bekannt, Acrylnitril in aliphatischen und aromatischen Kohlenwasserstoffen unter Verwendung von Azokatalysatoren zu polymerisieren (Faserforschung und Textiltechnik 12 [1961], 5, S. 208 und Faserforschung und Textiltechnik 15 [1965], S. 331).

Allgemein hat sich aber gezeigt, daß bei Polymerisationen in solchen Systemen der Einsatz von Azokatalysatoren und von peroxidischen Verbindungen alleine — ohne Zusatz einer aktivierenden Komponente — relativ hohe Reaktionstemperaturen erfordert, was zu stark verfärbten Produkten mit hoher molekularer Uneinheitlichkeit führt. Es ist ein weiterer Nachteil dieser Verfahrensweise, daß man auf die üblicherweise eingesetzten ionischen Färbecomonomeren ganz verzichten muß, da sie im System unlöslich sind und daher bei der Polymerisation nicht eingebaut werden. Das wirkt sich ungünstig auf die coloristischen Eigenschaften der so gewonnenen Polymeren und der daraus hergestellten Formkörper aus.

Es ist zwar bekannt und vor allem für die Massepolymerisation von Vinylchlorid beschrieben, daß man mit einem Startersystem aus einem organischen Hydroperoxid, Schwefeldioxid und einem nukleophilen basischen Agens die Polymerisationstemperatur bei akzeptablen Umsatzverhältnissen merklich absenken kann. Dabei wird aber ausdrücklich auf die Notwendigkeit der basischen Komponente hingewiesen. Ihr Fehlen bringt eine starke Umsatzeinbuße und führt durch den Einbau von Schwefeldioxid in die Polymerkette in Form von Sulfongruppierungen zu thermisch instabilen Polymerisaten (Chem. Ing. Nr. 16, 43 [1971], S. 941).

Die Übertragung des genannten Katalysatorsystems auf die Homo- und Copolymerisation des Acrylnitrils in aliphatischen Kohlenwasserstoffen gelingt nicht, da sich in diesem Medium bei der Reaktion von Schwefeldioxid mit den vorgeschlagenen basischen Komponenten eine den Polymerisationsablauf störende salzartige Verbindung ausscheidet, die für eine Aktivierung unwirksam ist.

Es wurde nun gefunden, daß Acrylnitril alleine oder in Gegenwart von weiteren copolymerisationsfähigen Monomeren in aliphatischen Kohlenwasserstoffen bei niedrigen Reaktionstemperaturen zu gut verarbeitbaren Produkten polymerisierbar ist, die überraschenderweise auch in Abwesenheit von speziellen Färbecomonomeren gegenüber kationischen Farbstoffen ein hervorragendes Färbeverhalten zeigen und aufgrund einer engen molekularen Verteilung einen guten Rohton und eine gute Thermostabilität aufweisen. Dies wird dadurch erreicht, daß ein Startersystem, bestehend aus Schwefeldioxid, einem in aliphatischen Kohlenwasserstoffen löslichen Hydroperoxid und einer systemlöslichen Säure, verwendet wird.

Die Erfindung betrifft daher ein Verfahren zur Herstellung von Polyacrylnitril und überwiegend Acrylnitril enthaltenden Copolymeren, dadurch gekennzeichnet, daß man Acrylnitril alleine oder mit bis zu 30 Gew.-% mindestens eines ethylenisch ungesättigten Comonomeren, wobei nur von ionischen Gruppierungen freie Comonomere verwendet werden, bei Temperaturen von 0 bis 60°C, gegebenenfalls unter Druck, in einem aliphatischen Kohlenwasserstoff mit einem Siedepunkt zwischen −10 und 80°C oder in Gemischen von aliphatischen Kohlenwasserstoffen mit Siedebereichen zwischen −10 und 80°C unter Verwendung eines Startersystems, das aus 0,1 bis 8,0 Mol-% Schwefeldioxid, 0,1 bis 2,0 Mol-% eines im Reaktionsmedium löslichen Hydroperoxids sowie 0,01 bis 1,0 Mol-% einer im Reaktionssystem löslichen Säure besteht (jeweils bezogen auf die eingesetzte Monomermenge), wobei das molare Verhältnis $SO_2$ zu Hydroperoxid 1 : 1 bis 6 : 1 beträgt, bis zu Umsätzen von 40 bis 95 Gew.-% polymerisiert.

Nach diesem Verfahren werden Homopolymere und Copolymere des Acrylnitrils mit bis zu 30 Gew.-% einpolymerisierten, Comonomereinheiten, wobei nur von ionischen Gruppierungen freie Comonomere verwendet werden, erhalten, dadurch gekennzeichnet, daß sie K-Werte von 50 bis 100 besitzen, gegenüber kationischen Farbstoffen ein Farbstoffaufnahmevermögen von mindestens 0,5 Gew.-% aufweisen, eine in Dimethylformamid-Lösung gemessene Leitfähigkeit von mindestens 10 µ Siemens und Gehalte an polymerfixiertem Schwefel im Falle von Copolymerisaten von 0,2 bis 1,5

Gew.-%, im Falle von Homopolymerisaten von 0,4 bis 1,2 Gew.-% besitzen.

Die Erfindung betrifft ebenso diese Polymeren.

Bevorzugte Polymere sind comonomerfreie Polymere des Acrylnitrils, dadurch gekennzeichnet, daß sie K-Werte von 60 bis 90, eine in Dimethylformamid-Lösung gemessene Leitfähigkeit von >15 μ Siemens und Gehalte an polymerfixiertem Schwefel von 0,4 bis 1,2 Gew.-% besitzen sowie Polymere, die durch ein Farbstoffaufnahmevermögen von 3 bis 10 Gew.-% gekennzeichnet sind.

Geeignete Comonomere im Rahmen der Erfindung sind alle mit Acrylnitril copolymerisationsfähigen ethylenisch ungesättigten Verbindungen, die in den als Fällmedium benutzten aliphatischen Kohlenwasserstoffen, beziehungsweise in deren Gemischen mit Acrylnitril löslich sind. Besonders geeignete Comonomere sind die Ester der Acryl- und Methacrylsäure, die Vinylester aliphatischer Carbonsäuren, Styrol und durch Alkylgruppen substituiertes Styrol, wie zum Beispiel α-Methylstyrol oder 4-tert.Butylstyrol, sowie Maleinsäureanhydrid und N-alkylsubstituierte Maleinsäureimide. Der Vorteil des erfindungsgemäßen Verfahrens äußert sich unter anderem darin, daß auch Comonomere, wie Maleinsäureanhydrid und Maleinsäureimide der allgemeinen Formel

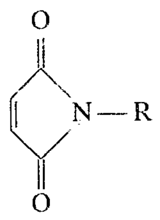

in der R einen linearen, verzweigten oder cyclischen Alkylrest mit bis zu 12 C-Atomen, vorzugsweise einen Methyl- oder Cyclohexylrest, darstellt, eingesetzt werden können. Diese Monomeren sind nach anderen Verfahrensweisen, zum Beispiel durch Polymerisation in wäßrigen Medien, nicht oder nur ungenügend zur Copolymerisation mit Acrylnitril befähigt. Maleinsäureanhydrid, aber auch die genannten Maleinsäureimide, werden erfindungsgemäß besonders in Kombination mit Styrol in Molverhältnissen von 1 : 1 bis 1 : 4 mit Acrylnitril copolymerisiert.

Die aufgeführten, mit Acrylnitril copolymerisationsfähigen Monomeren werden in Anteilen bis zu 30 Gew.-% (bezogen auf die Gesamtmenge der eingesetzten Monomermischung) eingesetzt. Für manche Einsatzgebiete sind Polymere mit Comonomeranteilen bis zu 15 Gew.-% bevorzugt.

Das erfindungsgemäße Verfahren bedient sich der Technik der Fällungspolymerisation, d. h. die entstehenden polymeren Materialien scheiden sich im Verlauf der Umsetzung als feinteilige, aber gut filtrierbare Partikel aus dem als Fällmedium dienenden Gemisch von aliphatischem Kohlenwasserstoff und eingesetzten Monomeren aus. Das Verfahren kann dabei kontinuierlich oder diskontinuierlich betrieben werden. Je nach den erzielbaren Umsätzen, die im Bereich von 40 bis 95 Gew.-% variieren können, vorzugsweise aber Werte von 70 bis 90 Gew.-% erreichen, ist das Verhältnis von eingesetzter Monomermenge und Menge an aliphatischen Kohlenwasserstoffen einzustellen. Der Anteil der eingesetzten Monomeren im reagierenden System beträgt 7 bis 35 Gew.-%, vorzugsweise 20 bis 32 Gew.-%.

Die im Reaktionsmedium dominierenden aliphatischen Kohlenwasserstoffe können als reine Stoffe mit definierten Siedepunkten zwischen −10 und 80°C oder in Form von Gemischen, so wie sie nach den üblichen Verfahren der Raffinerietechnik anfallen, mit Siedebereichen zwischen −10 und 80°C, eingesetzt werden. Bevorzugt zu nennen sind zum Beispiel Butan, Pentan und Cyclohexan sowie eine PetroletherType mit einem Siedebereich von 40 bis 80°C.

Ein wesentliches Merkmal des erfindungsgemäßen Verfahrens ist die Verwendung eines Redoxkatalysatorsystems, bestehend aus Schwefeldioxid, einem Hydroperoxid und einer systemlöslichen Säure, das die Durchführung der Polymerisation bei relativ niedrigen Temperaturen im Bereich von 0 bis 60°C ermöglicht.

Das Schwefeldioxid kann sowohl in flüssiger als auch in gasförmiger Form in Mengen von 0,1 bis 8,0 Mol-%, bezogen auf den Anteil der eingesetzten Monomeren, dem Polymerisationsansatz zugeführt werden.

Als im Reaktionsmedium lösliche Hydroperoxide kommen vorzugsweise solche mit sekundären und tertiären Alkylgruppen substituierte Typen sowie Aralkyl-gruppenhaltige Typen, in Mengen von 0,1−2 Mol-% zum Einsatz, wie sie z. B. durch Alkylierung von Wasserstoffperoxid mit geeigneten Alkylhalogeniden, Dialkylsulfaten oder Alkoholen in Gegenwart starker Säuren, beziehungsweise durch Anlagerung von Wasserstoffperoxid an Olefine, entstehen. Bevorzugt sind das technisch gut zugängliche tert.Butylhydroperoxid und Cumolhydroperoxid. Der Polymerisationsverlauf und die Eigenschaften der entstehenden Polymen werden entscheidend durch das Einsatzverhältnis der beiden Redoxkomponenten $SO_2$/Hydroperoxid mitgeprägt, das 1 : 1 bis 6 : 1 beträgt.

Weiterhin wird mit den beiden Redoxpartnern $SO_2$/Hydroperoxid eine systemlösliche Säure eingesetzt. Dies sind insbesondere organische Säuren in Mengen von 0,01 bis 1,0 Mol-%, vorzugsweise teil- und perhalogenierte Carbonsäuren mit bis zu 10 C-Atomen. Unter diesen sind bevorzugt zu nennen Trichloressigsäure, Perchlorpropionsäure, Perchlorbuttersäure. Die Carbonsäuren wirken regelnd auf den Initiierungs- und Molekülwachstumsprozeß bei der Polymerisation ein. Auf diese Weise wird eine zufriedenstellende Thermostabilität der erzeugten Polymerisate erzielt.

Die nach dem erfindungsgemäßen Verfahren anfallenden Fällungspolymerisate lassen sich nach Filtration, Wäsche und Trocknung als feinteilige Pulver mit Schüttdichten von 0,1 bis 0,5 $g/cm^3$ isolieren.

Es ist aber auch möglich, das Polymerisat direkt in eine zur Formgebung geeignete Lösung zu überführen, derart, daß man den noch aliphatischen Kohlenwasserstoff und nicht umgesetztes Monomer enthaltenden feuchten Filterkuchen gegebenenfalls unter Druck einer ein- oder mehrstufigen Wäsche mit einer niedrigsiedenden, das Polymere nicht lösenden organischen Waschflüssigkeit unterwirft, den so vorbehandelten Filterkuchen direkt in ein geeignetes Lösungsmittel für das Polymere einträgt, in einem Verdampfer die mit dem Polymerisat zugeführte Waschflüssigkeit sowie geringe Restanteile an Monomeren abtrennt und dabei gleichzeitig die Lösung auf eine für die Formgebung geeignete Konzentration und Viskosität einstellt. Als Verdampfer eignen sich prinzipiell die nach dem Stand der Technik bekannten Typen, wie zum Beispiel Dünnschichtverdampfer, Fallfilmverdampfer oder Eindampfschnecke.

Nach dieser Methode kann im Vergleich zu herkömmlichen Verfahren auf eine energieintensive Trockensstufe und auf die Zwischenlagerung von Trockenpolymerisat verzichtet werden. Das erfindungsgemäße Verfahren bietet unabhängig von der Aufarbeitungstechnik eine einfachere Möglichkeit, alle Komponenten des Systems zu recyclisieren.

Die nach dem erfindungsgemäßen Verfahren hergestellten Polymeren weisen überraschende Eigenschaften auf. Es war z. B. nicht vorhersehbar, daß unter Verzicht von ionischen Comonomeren, insbesondere von Sulfonsäuregruppierungen enthaltenden Komponenten, die gewonnenen Polymerisate, zum Beispiel als Pulver oder zu Formkörpern verformt, gegenüber kationischen Farbstoffen ein ausgezeichnetes Farbstoffaufnahmevermögen besitzen. Das manifestiert sich auch in einer vergleichsweise hohen elektrischen Leitfähigkeit der Polymerlösungen und einem relativ hohen Gehalt an polymergebundenem Schwefel.

Werden comonomerfreie Polyacrylnitrile verarbeitet, so treten nach dem bisherigen Stand der Technik eine Reihe von Schwierigkeiten auf: das Lösen von reinem Polyacrylnitril ist langwierig und die entstehenden Lösungen weisen zeitabhängig mangelnde Viskositätsstabilitäten auf. Des weiteren sind die aus solchen Lösungen hergestellten Formkörper infolge eines ungünstigen Anfärbeverhaltens nur im technischen Bereich einsetzbar.

Erfindungsgemäß sind dagegen comonomerfreie Polyacrylnitrile herstellbar, die neben den für Polyacrylnitril charakteristischen guten Eigenschaften, wie zum Beispiel Dimensionsstabilität der aus ihnen hergestellten Formkörper, auch hervorragend verarbeitbar sind und gegenüber kationischen Farbstoffen ein gutes Farbstoffaufnahmevermögen besitzen.

Das Farbstoffaufnahmevermögen der nach dem erfindungsgemäßen Verfahren erhaltenen Polymeren wurde auf folgende Weise bestimmt:

1 g Farbstoff pro Liter angesetzter Lösung wurde in heißem destillierten Wasser aufgelöst. Dann wurde 1 ml verdünnte Essigsäure (30 g/l) und 1 ml Natriumacetatlösung (40 g/l) hinzugegeben. Bei 20°C wurde bis zur Eichmarke gefüllt. Man erhielt auf diese Weise die Flotte. In 10 ml der oben angegebenen Flotte wurden 50 mg einer Folie, die aus einer Dimethylformamid-Lösung des entsprechenden Polymerisats erhalten wurde, 1 1/2 Stunden unter Rückfluß erwärmt. Nach Entnahme der Folie aus der Flotte und Abspülen wurde sie eine halbe Stunde in destilliertem Wasser gekocht. Gefärbt wurde mit einem blauen Farbstoff der Formel

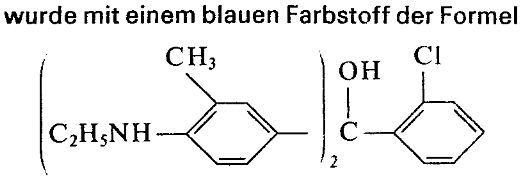

(I)

und einem roten Farbstoff der Formel

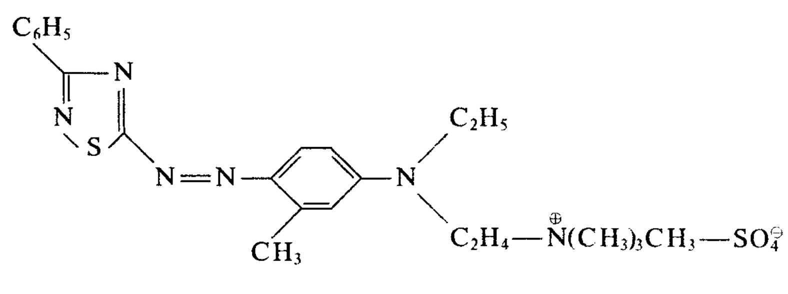

(II)

Die Folie wurde nach dieser Behandlung getrocknet und in Dimethylformamid gelöst. Die aufgenommene Farbstoffmenge wurde mit einem handelsüblichen Photometer über eine Extinktionsmessung ermittelt.

Die vorstehend und in den folgenden Beispielen aufgeführten Leitfähigkeitswerte des Polymeren wurden auf folgende Weise bestimmt:
800 mg gut getrocknetes Polymerisatpulver wurde in 80 ml Dimethylformamid mit einer Eigenleitfähigkeit <0,06 μ S unter Zusatz von 4 ml Methanol mit einer Eigenleitfähigkeit <0,06 μ S gelöst. Die so erhaltene Polymerisat-Lösung wurde dann mit 10 ml eines Mischbettaustauschers behandelt, um die nicht an das Polymer gebundenen ionischen Verbindungen abzutrennen. Nach einer Austauschdauer von 30 Minuten wurde die überstehende klare Polymerisat-Lösung entnommen und in ihr bei 20°C die Leitfähigkeit mit einer handelsüblichen Meßzelle ermittelt. Der festgestellte Wert, gemessen in μ Siemens, stellt ein Maß für die Konzentration an polymergebundenen ionischen Gruppen dar.

Die angeführten K-Werte der Polymeren wurden bei 20°C in 1%iger Dimethylformamidlösung nach H. Fikentscher, Cellulosechemie 15 (1932), S. 58 bestimmt. Die in den Beispielen angeführten Grenzviskositätszahlen [$\eta$] wurden in Dimethylformamidlösung bei 25°C gemessen und sind in dl/g angegeben. Zur Definition der Grenzviskositätszahlen siehe H.-G. Elias, Makromoleküle, Hüthig u. Wepf-Verlag, Basel, S. 265.

Die folgenden Beispiele dienen der näheren Erläuterung der Erfindung. Es verhalten sich Gewichtsteile zu Volumteilen wie Kilogramm zu Liter.

## Beispiel 1

### a) Herstellung eines Acrylnitril/Acrylsäuremethylester-Copolymerisats

In einen Autoklaven wurden als Vorlage eingetragen:

| | |
|---|---|
| 37,8 Vol.-Teile | Petrolether (Kp. 40—80°C) |
| 4,5 Gew.-Teile | Acrylnitril |
| 0,27 Gew.-Teile | Acrylsäuremethylester |
| 0,01 Gew.-Teile | Trichloressigsäure |
| 0,015 Gew.-Teile | tert.- Butylhydroperoxid |

Nach Durchleiten von Stickstoff und Erhitzen auf 35°C dosierte man innerhalb von 5 Stunden gleichzeitig und mit konstanter Dosiergeschwindigkeit die folgenden drei Lösungen zu:

Lösung I

| | |
|---|---|
| 24,54 Vol.-Teile | Petrolether (Kp. 40—80°C) |
| 4,0 Gew.-Teile | Acrylnitril |
| 0,45 Gew.-Teile | Acrylsäuremethylester |
| 0,01 Gew.-Teile | Trichloressigsäure |

Lösung II

| | |
|---|---|
| 6,14 Vol.-Teile | Petrolether (Kp. 40—80°C) |
| 4,0 Gew.-Teile | Acrylnitril |
| 0,23 Vol.-Teile | Schwefeldioxid |

Lösung III

| | |
|---|---|
| 6,14 Vol.-Teile | Petrolether (Kp. 40—80°C) |
| Gew.-Teile | Acrylnitril |
| Gew.-Teile | Acrylsäuremethylester |
| 0,095 Gew.-Teile | tert. Butylhydroperoxid |

Nach der Dosierphase ließ man weitere 15 Minuten bei 35°C nachrühren. Anschließend wurde der als Fällmedium eingesetzte Petrolether und Anteile von nicht umgesetzten Monomeren durch Zentrifugieren abgetrennt. Danach wurde der anfallende Filterkuchen mit 60 Vol.-Teilen Petrolether nachgewaschen. Man isolierte ein Polymerisat mit folgenden Eigenschaften:

| | | |
|---|---|---|
| Zusammensetzung: | 94,0 Gew.-% | Acrylnitril |
| | 5,0 Gew.-% | Acrylsäuremethylester |
| | .0,3 Gew.-% | gebundener Schwefel |

| | |
|---|---|
| K-Wert: | 76 |
| Leitfähigkeit: | 11,9 μ S |
| Ausbeute: | 14 Gew.-Teile (das entspricht einem Umsatz von 85,8 Gew.-%) |

b) Ermittlung des Farbstoffaufnahmevermögens

Das nach dem Waschen von der Zentrifuge entnommene noch petroletherfeuchte Polymerisat mit einem Feststoffanteil von 75 Gew.-% wurde ohne Zwischentrocknung im Gew.-Verhältnis 1 : 2 mit Dimethylformamid vermischt.

Nach kurzer Lösezeit wurden im Dünnschichtverdampfer bei 0,8 bar/55° C die flüchtigen Bestandteile — Petroläther und geringe Mengen an nicht umgesetzten Monomeren — abgetrennt. Man erhält auf diese Weise 50 Gew.-Teile einer 28%igen DMF-Lösung des Acrylnitril/Acrylsäuremethylester-Copolymerisats mit einer Viskosität von 80 Pa · s/20° C.

Diese Lösung wurde anschließend durch Filmaufstrich zu einer Folie mit einer Dicke von 50 μm verarbeitet. Das so erhaltene Folienmaterial wurde, wie vorstehend beschrieben, mit dem blauen Farbstoff I und dem roten Farbstoff II gefärbt und das Farbstoffaufnahmevermögen im Vergleich zu einem handelsüblichen Material (Zusammensetzung: 94,0 Gew.-% Acrylnitril, 5 Gew.-% Acrylsäuremethylester, 1,0 Gew.-% Methallylsulfonat — K-Wert 78 — Leitfähigkeit 11,2 μ S) ermittelt.

| | Farbstoffaufnahme nach dem erfindungsgemäßen Verfahren gewonnenen Folie | Farbstoffaufnahme der Vergleichsfolie (Handelsprodukt) |
|---|---|---|
| Farbstoff I (blau) | 10,2 Gew.-% | 5,7 Gew.-% |
| Farbstoff II (rot) | 3,7 Gew.-% | 3,2 Gew.-% |

Beispiel 2

Herstellung eines Acrylnitril/Acrylsäuremethylester-Copolymerisats

In einen Autoklaven wurden als Vorlage eingetragen:

| | |
|---|---|
| 250 Vol.-Teile | Petrolether (Kp. 20—40° C) |
| 32,2 Vol.-Teile | Acrilnitril |
| 12,4 Vol.-Teile | Acrylsäuremethylester |
| 0,15 Gew.-Teile | Perchlorpropionsäure |

Nach Durchleiten von Stickstoff und Erhitzen auf 30° C dosierte man innerhalb von 4 Stunden gleichzeitig und mit konstanter Dosiergeschwindigkeit die folgenden drei Lösungen:

Lösung I

| | |
|---|---|
| 450 Vol.-Teile | Petrolether (Kp. 20—40° C) |
| 128,8 Vol.-Teile | Acrylnitril |
| 12,4 Vol.-Teile | Acrylsäuremethylester |
| 0,15 Gew.-Teile | Perchlorpropionsäure |

Lösung II

| | |
|---|---|
| 70 Vol.-Teile | Petrolether |
| 57 Vol.-Teile | Acrylnitril |
| 4 Vol.-Teile | Schwefeldioxid (kondensiert) |

Lösung III

| | |
|---|---|
| 150 Vol.-Teile | Petrolether |
| 24,8 Vol.-Teile | Acrylnitril |

| | |
|---|---|
| 5,6 Vol.-Teile | Acrylsäuremethylester |
| 1,7 Vol.-Teile | tert. Butylhydroperoxid |

Nach Abkühlen der entstandenen Polymerisatsuspension wurde der Petrolether und nicht umgesetzte Monomeranteile durch Zentrifugieren abgetrennt. Der Filterkuchen wurde anschließend mit 500 Vol.-Teilen Petrolether (Kp. 20—40 C) nachgewiesen. Man isolierte ein Polymerisat mit folgenden Eigenschaften:

| | | |
|---|---|---|
| Zusammensetzung: | 87,5 Gew.-% | Acrylnitril |
| | 11,5 Gew.-% | Acrylsäuremethylester |
| | 0,33 Gew.-% | gebundenen Schwefel |
| K-Wert: | 70 | |
| Leitfähigkeit: | 14,5 µ S | |
| Ausbeute: | 203,5 Gew.-% (das entspricht einem Umsatz von 91,0 Gew.-%) | |

Das Farbstoffaufnahmevermögen wurden nach der in Beispiel 16 angegebenen Methode ermittelt: Überführen des Polymerisats in eine Dimethylformamid-Lösung, Herstellung einer 50 m dicken Folie und Färben. Im Vergleich zu einem handelsüblichen Material (Zusammensetzung: 94 Gew.-% Acrylnitril, 5 Gew.-% Acrylsäuremethylester, 1,0 Gew.-% Methallylsulfonat — K-Wert 78) ergab sich folgender Befund:

| | Farbstoffaufnahme der gem. Beispiel gewonnenen Folie | Farbstoffaufnahme der Vergleichsfolie (Handelsprodukte) |
|---|---|---|
| Farbstoff I (blau) | 13,2 Gew.-% | 5,7 Gew.-% |
| Farbstoff II (rot) | 4,5 Gew.-% | 3,2 Gew.-% |

Beispiel 3

Herstellung eines Acrylnitril-Homopolymeren nach dem erfindungsgemäßen Verfahren

In einen Autoklaven wurden als Vorlage eingetragen:

| | |
|---|---|
| 250 Vol.-Teile | Petrolether (Kp. 40—80° C) |
| 80 Vol.-Teile | Acrylnitril |
| 0,4 Gew.-Teile | Trichloressigsäure |

Nach Durchleiten von Stickstoff und Temperierung auf 35° C dosierte man innerhalb von 3 Stunden gleichzeitig die folgenden 3 Lösungen zur Vorlage:

Lösung I

| | |
|---|---|
| 450 Vol.-Teile | Petrolether (Kp. 40—80° C) |
| 128,8 Vol.-Teile | Acrylnitril |
| 1,0 Gew.-Teile | Trichloressigsäure |

Lösung II

| | |
|---|---|
| 70 Vol.-Teile | Petrolether (Kp. 40—80° C) |
| 57 Vol.-Teile | Acrylnitril |
| 6,5 Vol.-Teile | Schwefeldioxid (kondensiert) |

Lösung III

| | |
|---|---|
| 150 Vol.-Teile | Petrolether (Kp. 40—80°) |
| 28,8 Vol.-Teile | Acrylnitril |
| 2,55 Vol.-Teile | tert. Butylhydroperoxid |

Nach Beendigung der Polymerisation wurde durch Filtration der Petrolether und nicht umgesetztes Acrylnitril abgetrennt. Nach einer Wäsche mit weiteren 100 Vol.-Teilen Petrolether und anschließender Trocknung erhielt man ein Polymerisat mit folgenden Eigenschaften:

| | |
|---|---|
| Zusammensetzung: | Polyacrylnitril mit 0,6 Gew.-% gebundenem Schwefel |
| K-Wert: | 81 |
| Leitfähigkeit: | 16,3 µS |
| Ausbeute: | 189 Gew.-Teile (das entspricht einem Umsatz von 80,1 Gew.-%) |

Das angefallene Polymere wurde auf übliche Weise zu einer 50 µm starken Folie verarbeitet, deren Farbstoffaufnahme im Vergleich zu einem handelsüblichen Material (Polyacrylnitril mit 0,1 Gew.-% polymerfixiertem Schwefel, hergestellt durch Polymerisation im wäßrigen Medium — K-Wert: 89 — Leitfähigkeit: 4,5 µ S) ermittelt wurde:

| | Farbstoffaufnahme der gem. Beispiel erhaltenen Folie | Farbstoffaufnahme der Vergleichsfolie (Handelsprodukt) |
|---|---|---|
| Farbstoff I (blau) | 6,8 Gew.-% | 1,5 Gew.-% |
| Farbstoff II (rot) | 3,2 Gew.-% | 0,5 Gew.-% |

Beispiel 4

Herstellung eines Acrylnitril-Homopolymeren nach dem erfindungsgemäßen Verfahren

In einen Autoklaven wurden als Vorlage eingetragen:

| | |
|---|---|
| 250 Vol.-Teile | Petrolether (Kp. 40—80° C) |
| 80 Vol.-Teile | Acrylnitril |
| 0,6 Gew.-Teile | Trichloressigsäure |

Nach Durchleiten von Stickstoff und Temperierung auf 35° C dosierte man innerhalb von 3 Stunden gleichzeitig und mit konstanter Dosiergeschwindigkeit die folgenden drei Lösungen:

Lösung I

| | |
|---|---|
| 450 Vol.-Teile | Petrolether (Kp. 40—80° C) |
| 128,8 Vol.-Teile | Acrylnitril |
| 1,5 Gew.-Teile | Trichloressigsäure |

Lösung II

| | |
|---|---|
| 70 Vol.-Teile | Petrolether (Kp. 40—80° C) |
| 57 Vol.-Teile | Acrylnitril |
| 7,2 Vol.-Teile | Schwefeldioxid (kondensiert) |

Lösung III

| | |
|---|---|
| 150 Vol.-Teile | Petrolether |
| 24,8 Vol.-Teile | Acrylnitril |
| 6,0 Vol.-Teile | tert. Butylhydroperoxid |

Die anfallende Polymerisatsuspension wurde wie üblich durch Filtration, Waschen und Trocknen aufgearbeitet. Man erhielt ein Polymerisat mit folgenden Eigenschaften:

| | |
|---|---|
| Zusammensetzung: | Polyacrylnitril mit 0,9 Gew.-% polymerfixiertem Schwefel |
| K-Wert: | 63 |
| Leitfähigkeit: | 18,6 µ S |

| | |
|---|---|
| Ausbeute: | 194 Gew.-Teile (das entspricht einem Umsatz von 83,3 Gew.-%) |
| Farbstoffaufnahme: | blauer Farbstoff I 9,7 Gew.-% |
| | roter Farbstoff II 4,3 Gew.-% |

Beispiel 5

Herstellung eines Acrylnitril/Acrylsäuremethylester-Copolymerisates durch kontinuierliche Polymerisation in Cyclohexan

Die folgenden Lösungen I bis V wurden bei der Polymerisation eingesetzt:

Lösung I

| | |
|---|---|
| 1870 Gew.-Teile | Cyclohexan |
| 270 Gew.-Teile | Acrylnitril |
| 16,5 Gew.-Teile | Acrylsäuremethylester |
| 1,8 Gew.-Teile | Cumolhydroperoxid (100%ig) |
| 0,75 Gew.-Teile | Trichloressigsäure |

Lösung II

| | |
|---|---|
| 3750 Gew.-Teile | Cyclohexan |
| 850 Gew.-Teile | Acrylnitril |
| 51 Gew.-Teile | Acrylsäuremethylester |
| 2,0 Gew.-Teile | Trichloressigsäure |

Lösung III

| | |
|---|---|
| 3750 Gew.-Teile | Cyclohexan |
| 850 Gew.-Teile | Acrylnitril |
| 51 Gew.-Teile | Acrylsäuremethylester |
| 29 Gew.-Teile | Schwefeldioxid |

Lösung IV

| | |
|---|---|
| 3750 Gew.-Teile | Cyclohexan |
| 850 Gew.-Teile | Acrylnitril |
| 51 Gew.-Teile | Acrylsäuremethylester |
| 17 Gew.-Teile | Cumolhydroperoxid (100%ig) |

Lösung V

| | |
|---|---|
| 30 Gew.-Teile | Cyclohexan |
| 16 Gew.-Teile | Acrylnitril |
| 1 Gew.-Teil | Acrylsäuremethylester |
| 3 Gew.-Teile | Schwefeldioxid |

Die Lösung I wurde unter Stickstoffatmosphäre in einem Rührkesselreaktor, ausgestattet mit einem Gitterrührer und einem am Bodenablaß angeschlossenen Überlaufrohr, vorgelegt und auf 50°C temperiert. Diese Temperatur wurde während der gesamten Reaktion aufrechterhalten. Bei einer Rührgeschwindigkeit von 250 U/min wurden während einer Vorpolymerisationsphase von 1,5 Stunden die folgenden Mengenströme über Pumpen gleichlaufend dosiert:

| | |
|---|---|
| Lösung II: | 300 Vol.-Teile/Stunde |
| Lösung III: | 300 Vol.-Teile/Stunde |
| Lösung IV: | 300 Vol.-Teile/Stunde |
| Lösung V: | 40 Vol.-Teile/Stunde |

Nach dieser Zeit wurde das Überlaufniveau im Austragrohr erreicht. Im folgenden kontinuierlichen

Betrieb wurde eine den dosierten Lösungen

| | |
|---|---|
| Lösung II: | 300 Vol.-Teile/Stunde |
| Lösung III: | 300 Vol.-Teile/Stunde |
| Lösung IV: | 300 Vol.-Teile/Stunde |

entsprechende Menge Polymerisatdispersion — ca. 700 Gew.-Teile/Stunde — kontinuierlich ausgetragen. Nach 5stündiger Polymerisation wurde bezüglich Umsatz, Polymerisatzusammensetzung und mittlerem Molgewicht ein stationärer Zustand erreicht.

Es fällt ein Acrylnitril/Acrylsäuremethylester-Copolymerisat mit folgenden Eigenschaften an:

| | |
|---|---|
| Zusammensetzung: | 92,5 Gew.-% Acrylnitril |
| | 6,0 Gew.-% Acrylsäuremethylester |
| | 0,55 Gew.-% eingebauter Schwefel |
| K-Wert: | 79 $[\eta]$ DMF$^{=1,39}$ |
| Ausbeute: | 110 Gew.-Teile Polymerisat/Stunde (das entspricht bei einer Verweilzeit von 4,5 Stunden einem Umsatz von 81 Gew.-%) |
| Farbstoffaufnahme: | blauer Farbstoff I 11,0 Gew.-% |
| | roter Farbstoff II 4,1 Gew.-% |
| Leitfähigkeit: | 15,5 µ S |

Die anfallende Polymerisatsuspension wurde, wie in Beispiel 7b beschrieben, aufgearbeitet und in eine Dimethylformamid-Lösung mit einer Feststoffkonzentration von 29 Gew.-% und einer Lösungsviskosität von 83 Pa · s/20° C überführt.

## Beispiel 6

### Herstellung eines Acrylnitril/Styrol-Copolymeren

Die folgenden Lösungen I, II, III und IV wurden bei der Polymerisation eingesetzt:

Lösung I

| | |
|---|---|
| 330 Gew.-Teile | Petrolether (Kp. 40—80° C) |
| 18,5 Gew.-Teile | Acrylnitril |
| 1,5 Gew.-Teile | Styrol |

Lösung II

| | |
|---|---|
| 280 Gew.-Teile | Petrolether (Kp. 40—80° C) |
| 125,5 Gew.-Teile | Acrylnitril |
| 16,5 Gew.-Teile | Styrol |
| 0,2 Gew.-Teile | Trichloressigsäure |

Lösung III

| | |
|---|---|
| 26,5 Gew.-Teile | Petrolether (Kp. 40—80°) |
| 20,0 Gew.-Teile | Acrylnitril |
| 1,6 Gew.-Teile | tert. Butylhydroperoxid (100%ig) |

Lösung IV

| | |
|---|---|
| 26,5 Gew.-Teile | Petrolether (Kp. 40—80°) |
| 20,0 Gew.-Teile | Acrylnitril |
| 2,5 Gew.-Teile | Schwefeldioxid |

In einem Rührkesselreaktor, ausgestattet mit einem wandgängigen Wendelrührer, einem eiswassergekühlten Rückflußkühler und 3 Dosiereinrichtungen für die Lösungen II, III und IV, wurden 50 Gew.-Teile eines Acrylnitril/Styrol/Copolymeren*) und die Lösung I vorgelegt, und die unter Rühren (200 U/min) gebildete Suspension auf 45° C temperiert.

Die Polymerisation wurde durch Zugabe von je 5 Vol.-Teilen der Lösungen II und III gestartet. Während einer Reaktionszeit von 6 Stunden wurde die Temperatur auf 45°C eingestellt und gleichlaufend die folgenden Lösungen dosiert:

| | |
|---|---|
| Lösung II: | 100 Vol.-Teile/Stunde |
| Lösung III: | 10 Vol.-Teile/Stunde |
| Lösung IV: | 10 Vol.-Teile/Stunde |

*) Es ist vorteilhaft, die Acrylnitril/Styrol-Copolymerisation mit einer Polymerisationsfage zu starten, um in der Anfangsphase Komplikationen — zum Beispiel Abrandungen und Verklebungen —, die von einer Styrolanreicherung im Ansatz herrühren, zu vermeiden. Das vorgelegte Polymerisat muß in seinem Eigenschaftsniveau auf das während der Reaktion sich bildende Polymer abgestimmt sein. Im vorliegenden Beispiel wurde folgendes Acrylnitril/Styrol-Copolymer eingesetzt:

| | | |
|---|---|---|
| Zusammensetzung: | 88 Gew.-% | Acrylnitril |
| | 11 Gew.-% | Styrol |
| | 0,25 Gew.-% | eingebauter Schwefel |
| K-Wert: | 78,5 | $[\eta]$ DMF$^{=1,37}$ |

Man isoliert nach der Filtration und nach einem weiteren Waschcyclus mit Petrolether ein Polymerisat mit folgenden Eigenschaften:

| | |
|---|---|
| Zusammensetzung: | 87,5 Gew.-% Acrylnitril |
| | 10,5 Gew.-% Styrol |
| | 0,65 Gew.-% gebundenen Schwefel |
| K-Wert: | 80 $[\eta]$ DMF$^{=1,39}$ |
| Farbstoffaufnahme: | blauer Farbstoff I 9,8 Gew.-% |
| | roter Farbstoff II 3,2 Gew.-% |
| Leitfähigkeit: | 14,8 µ S |
| Ausbeute: | 170 Gew.-Teile (abzüglich der vorgelegten Polymerisatmenge) |
| Umsatz: | 85 Gew.-% |

Beispiel 7

a) Herstellung eines Acrylnitril/N-Cyclohexylmaleinimid-Copolymerisates

Die folgenden Lösungen I, II, III und IV wurden eingesetzt:

Lösung I

| | |
|---|---|
| 24 650 Gew.-Teile | Petrolether (Kp. 40—80°) |
| 4 500 Gew.-Teile | Acrylnitril |
| 450 Gew.-Teile | N-Cyclohexylmaleinimid |
| 40 Gew.-Teile | Cumolhydroperoxid (100%ig) |
| 7,2 Gew.-Teile | Trichloressigsäure |

Lösung II

| | |
|---|---|
| 17 450 Gew.-Teile | Petrolether (Kp. 40—80°C) |
| 4 150 Gew.-Teile | Acrylnitril |
| 810 Gew.-Teile | N-Cyclohexylmaleinimid |
| 14 Gew.-Teile | Trichloressigsäure |

Lösung III

| | |
|---|---|
| 4 150 Gew.-Teile | Petrolether (Kp. 40—80°C) |
| 4 070 Gew.-Teile | Acrylnitril |
| 180 Gew.-Teile | Schwefeldioxid |

Lösung IV

| | |
|---|---|
| 3 800 Gew.-Teile | Petrolether (Kp. 40—80° C) |
| 3 320 Gew.-Teile | Acrylnitril |
| 82,5 Gew.-Teile | Cumolhydroperoxid (100%ig) |

In einem Rührautoklaven aus VA-Stahl, ausgestattet mit einem Ankerrührer, wurde durch Einleiten von Stickstoff eine Inertgas-Atmosphäre eingestellt. Danach wurde die Lösung I als Vorlage eingefüllt und im geschlossenen Autoklav auf 35° C temperiert.

Die Polymerisation wurde durch Zugabe von 1500 Vol.-Teilen Lösung III gestartet. Anschließend wurden mittels Dosierpumpen die Lösung II, die Restmenge von Lösung III und Lösung IV gleichlaufend dosiert.

| | |
|---|---|
| Lösung II: | 6500 Vol.-Teile/Stunde |
| Lösung III: | 2000 Vol.-Teile/Stunde |
| Lösung IV: | 2000 Vol.-Teile/Stunde |

Die Dosierdauer betrug 5 Stunden. Während dieser Zeit wude die Reaktionstemperatur auf 35° C konstant gehalten. Die Rührgeschwindigkeit wurde, beginnend bei 80 U/min, stündlich um 20 U/min erhöht.

Die anfallende Polymerisatsuspension wurde nach Abkühlen auf 10 bis 15° C filtriert. Der noch Petrolether und Restmonomere enthaltende Filterkuchen wurde anschließend in Äthanol aufgeschlämmt und dann erneut filtriert.

| | |
|---|---|
| Polymerisatausbeute nach Trocknung: | 13 500 Gew.-Teile<br>(das entspricht einem Umsatz von 78 Gew.-%) |
| Zusammensetzung des Polymerisates: | 89,2 Gew.-% Acrylnitril<br>9,3 Gew.-% N-Cyclohexylmaleinimid<br>0,6 Gew.-% eingebauter Schwefel |
| K-Wert: | 81 $[\eta]$ DMF $= 1{,}48$ |
| Farbstoffaufnahme: | blauer Farbstoff I 8,5 Gew.-%<br>roter Farbstoff II 3,2 Gew.-% |
| Leitfähigkeit: | 15,7 µS |

b) Aufarbeitung der anfallenden Polymerisatsuspension in einem Schneckenverdampfer

Der nach der 1. Filtration anfallende Filterkuchen wurde einer weiteren Wäsche mit Petrolether unterworfen. Der danach verbleibende Polymerisatrückstand mit einem Restgehalt an Waschlösungsmittel von 60 Gew.-% wurde der Mischzone eines Schneckenverdampfers zugeführt und dort im Gewichtsverhältnis 1 : 1 mit Dimethylformamid vermischt. Das zweiphasige Gemisch wurde danach in einer Heizzone unter Kompression auf 80 bis 100°C aufgeheizt, um in der folgenden Verdampfungszone unter Normaldruck den überwiegenden Anteil an Petrolether zusammen mit geringen Anteilen an Restmonomeren abdampfen zu lassen. Nach Durchlaufen einer weiteren Kompressionszone, in der die hochviskose Lösung auf 80 bis 90° C temperiert wurde, erfolgte in einer zweiten Ausdampfzone unter Vakuum (0,1 bar) die Abtrennung von Restwaschflüssigkeit zusammen mit geringen Anteilen von Dimethylformamid. Danach wurde die blasenfreie Dimethylformamid-Lösung des Polymerisates mit einer Konzentration von 31 Gew.-% und einer Lösungsviskosität von 95 Pa · s/20° C ausgetragen. Verweilzeit: 1 bis 3 Minuten.

Beispiel 8

Herstellung eines Acrylnitril/Styrol/Maleinsäureanhydrid-Copolymeren

Die folgenden Lösungen I, II, III und IV wurden bei der Polymerisation eingesetzt:

Lösung I

| | |
|---|---|
| 300 Gew.-Teile | Cyclohexan |
| 115 Gew.-Teile | Acrylnitril |

| | |
|---|---|
| 6,8 Gew.-Teile | Styrol |
| 6,4 Gew.-Teile | Maleinsäureanhydrid |
| 0,2 Gew.-Teile | Trichloressigsäure |

Lösung II

| | |
|---|---|
| 300 Gew.-Teile | Cyclohexan |
| 115 Gew.-Teile | Acrylnitril |
| 6,8 Gew.-Teile | Styrol |
| 8,0 Gew.-Teile | Maleinsäureanhydrid |
| 0,2 Gew.-Teile | Trichloressigsäure |

Lösung III

| | |
|---|---|
| 38 Gew.-Teile | Cyclohexan |
| 14 Gew.-Teile | Acrylnitril |
| 0,8 Gew.-Teile | Styrol |
| 3,6 Gew.-Teile | Cumolhydroperoxid |

Lösung IV

| | |
|---|---|
| 38 Gew.-Teile | Cyclohexan |
| 14 Gew.-Teile | Acrylnitril |
| 0,8 Gew.-Teile | Styrol |
| 3,5 Gew.-Teile | Schwefeldioxid |

In einen Rührkesselreaktor, ausgestattet mit einem wandgängigen Wendelrührer, einem eiswassergekühlten Rückflußkühler und 3 Dosiereinrichtungen für die Lösungen II, III und IV wurde die Lösung I als Vorlage eingetragen und auf 50°C temperiert. Die Polymerisation wurde durch Zugabe von je 5 Vol.-Teilen der Lösungen III und IV gestartet. Während der Polymerisationsphase wurden unter Konstanthaltung der Reaktionstemperatur von 50°C die folgenden Lösungen innerhalb von 6 Stunden gleichlaufend dosiert:

| | |
|---|---|
| Lösung II: | 90 Vol.-Teile/Stunde |
| Lösung III: | 10 Vol.-Teile/Stunde |
| Lösung IV: | 10 Vol.-Teile/Stunde |

Man isoliert nach der Filtration und zwei weiteren Waschcyclen mit Cyclohexan bzw. Methanol ein Polymerisat mit folgenden Eigenschaften:

| | | |
|---|---|---|
| Zusammensetzung: | 84,7 Gew.-% | Acrylnitril |
| | 7,5 Gew.-% | Styrol |
| | 7,0 Gew.-% | Maleinsäureanhydrid |
| | 0,45 Gew.-% | gebundenen Schwefel |
| K-Wert: | 77 $[\eta]$ DMF$^{=1,24}$ | |
| Farbstoffaufnahme: | blauer Farbstoff I 10,2 Gew.-% | |
| | roter Farbstoff II 3,6 Gew.-% | |
| Leitfähigkeit: | 15,2 µS | |
| Ausbeute: | 192 Gew.-Teile (das entspricht einem Umsatz von 66 Gew.-%) | |

**Patentansprüche**

1. Homopolymere und Copolymere des Acrylnitrils mit bis zu 30 Gew.-% einpolymerisierten Comonomereinheiten, wobei nur von ionischen Gruppierungen freie Comonomere verwendet werden, dadurch gekennzeichnet, daß sie K-Werte von 50 bis 100 besitzen, gegenüber kationischen Farbstoffen ein Farbstoffaufnahmevermögen von mindestens 0,5 Gew.-% aufweisen, eine in Dimethylformamid-Lösung gemessene Leitfähigkeit von mindestens 10 µ Siemens und Gehalte an polymerfixiertem Schwefel im Falle von Copolymerisaten von 0,2 bis 1,5 im Falle von Homopolymerisaten von 0,4 bis 1,2 Gew.-% besitzen.

2. Copolymere nach Anspruch 1, dadurch gekennzeichnet, daß sie mindestens eines der Monomeren (Meth)-Acrylsäurealkylester, Vinylester aliphatischer Carbonsäuren, Styrol oder durch

Alkylgruppen substituiertes Styrol, Maleinsäureanhydrid, N-alkylsubstituierte Maleinsäureamide, copolymerisiert enthalten.

3. Copolymere nach den Ansprüchen 1 und 2, dadurch gekennzeichnet, daß sie bis zu 15 Gew.-% Comonomeranteile enthalten.

4. Comonomerfreie Polymere des Acrylnitrils nach Anspruch 1, dadurch gekennzeichnet, daß sie K-Werte von 60—90, eine in Dimethylformamid-Lösung gemessene Leitfähigkeit von >15 μ Siemens und Gehalte an polymerfixiertem Schwefel von 0,4—1,2 Gew.-% besitzen.

5. Polymere nach den Ansprüchen 1 bis 4, dadurch gekennzeichnet, daß sie ein Farbstoffaufnahmevermögen von 3 bis 10 Gew.-% haben.

6. Verfahren zur Herstellung von Polyacrylnitril und überwiegend Acrylnitril enthaltenden Copolymeren, dadurch gekennzeichnet, daß man Acrylnitril alleine oder mit bis zu 30 Gew.-% mindestens eines ethylenisch ungesättigten Comonomeren, wobei nur von ionischen Gruppierungen freie Comonomere verwendet werden, bei Temperaturen von 0 bis 60° C, gegebenenfalls unter Druck, in einem aliphatischen Kohlenwasserstoff mit einem Siedepunkt zwischen −10 und 80° C oder in Gemischen von aliphatischen Kohlenwasserstoffen mit Siedebereichen zwischen −10 und 80° C unter Verwendung eines Startersystems, das von 0,1 bis 8,0 Mol-% Schwefeldioxid, 0,1 bis 2,0 Mol-% eines im Reaktionsmedium löslichen Hydroperoxids sowie 0,01 bis 1,0 Mol-% einer im Reaktionssystem löslichen Säure besteht (jeweils bezogen auf die eingesetzte Monomermenge), wobei das molare Verhältnis $SO_2$ zu Hydroperoxid 1 : 1 bis 6 : 1 beträgt, bis zu Umsätzen von 40 bis 95 Gew.-% polymerisiert.

7. Verfahren nach Anspruch 6, dadurch gekennzeichnet, daß als ethylenisch ungesättigte Comonomere (Meth-)Acrylsäurealkylester, Vinylester aliphatischer Carbonsäuren, Styrol oder durch Alkylgruppen substituiertes Styrol, Maleinsäureanhydrid oder N-alkylsubstituierte Maleinsäureimide copolymerisiert werden.

8. Verfahren nach den Ansprüchen 6 und 7, dadurch gekennzeichnet, daß als Comonomere Maleinsäureanhydrid oder N-alkylsubstituierte Maleinsäureimide in Kombination mit Styrol in molaren Verhältnissen von 1 : 1 bis 1 : 4 eingesetzt werden.

9. Verfahren nach den Ansprüchen 6 bis 8, dadurch gekennzeichnet, daß die ethylenisch ungesättigten Comonomeren in Mengen bis zu 15 Gew.-%, bezogen auf eingesetztes Acrylnitril, copolymerisiert werden.

10. Verfahren nach den Ansprüchen 6 bis 9, dadurch gekennzeichnet, daß als Hydroperoxide tert. Butylhydroperoxid und/oder Cumolhydroperoxid verwendet werden.

11. Verfahren nach den Ansprüchen 6 bis 10, dadurch gekennzeichnet, daß als systemlösliche Säuren teil- oder perhalogenierte Carbonsäuren mit bis zu 10 C-Atomen verwendet werden.

**Claims**

1. Homopolymers and copolymers of acrylonitrile comprising up to 30% by weight of comonomer units incorporated by polymerisation, only comonomers free from ionic groups being used, characterised in that they have K-values of from 50 to 100, a dye absorption capacity for cationic dyes of at least 0.5% by weight, a conductivity, measured in dimethylformamide solution, of at least 10 μ Siemens and contents of sulphur fixed in the polymers of from 0.2 to 1.5% by weight in the case of copolymers and from 0.4 to 1.2% by weight in the case of homopolymers.

2. Copolymers according to Claim 1, characterised in that they contain, copolymerised therein, at least one of the monomers selected from (meth)acrylic acid alkyl esters, vinyl esters of aliphatic carboxylic acids, styrene or styrene substituted by alkyl groups, maleic acid anhydride and N-alkyl-substituted maleic acid amides.

3. Copolymers according to Claims 1 and 2, characterised in that they contain up to 15% by weight of comonomer.

4. Comonomer-free polymers of acrylonitrile according to Claim 1, characterised in that they have K-values of 60—90, a conductivity, measured in dimethylformamide solution, of >15 μ Siemens and contents of sulphur fixed in the polymers of from 0.4—1.2% by weight.

5. Polymers according to Claims 1 to 4, characterised in that they have a dye absorption capacity of from 3 to 10% by weight.

6. Process for the preparation of polyacrylonitrile and copolymers predominantly containing acrylonitrile, characterised in that acrylonitrile alone or with up to 30% by weight of at least one ethylenically unsaturated comonomer, only comonomers free of ionic groupings being used, ist polymerised to conversions of from 40 to 95% by weight, at temperatures of from 0 to 60° C, optionally under pressure, in an aliphatic hydrocarbon having a boiling point between −10 and 80° C or in mixtures of aliphatic hydrocarbons having boiling points between −10 and 80° C using a starting system which consists of 0.1 to 8.0 mol % of sulphur dioxide, 0.1 to 2.0 mol % of a hydroperoxide which is soluble in the reaction medium and 0.01 to 1.0 mol % of an acid which is soluble in the reaction system (based in each case on the quantity of monomers used), the molar ration of $SO_2$ to hydroperoxide being from 1 : 1 to 6 : 1.

7. Process according to Claim 6, characterised in that the ethylenically unsaturated comonomers which are copolymerised are (meth)acrylic acid alkyl esters, vinyl esters of aliphatic carboxylic acids, styrene or styrene substituted by alkyl groups, maleic acid anhydride or N-alkyl-substituted maleic acid imides.

8. Process according to Claims 6 and 7, characterised in that the comonomers used are maleic acid anhydride or N-alkylsubstituted maleic acid imides in combination with styrene in molar ratios of from 1 : 1 to 1 : 4.

9. Process according to Claims 6 to 8, characterised in that the ethylenically unsaturated comonomers are copolymerised in amounts of up to 15% by weight, based on the amount of acrylonitrile used.

10. Process according to Claims 6 to 9, characterised in that the hydroperoxides used are tert.-butyl-hydroperoxide and/or cumene hydroperoxide.

11. Process according to Claims 6 to 10, characterised in that partially halogenated or perhalogenated carboxylic acids having up to 10 C-atoms are used as the acids soluble in the system.

**Revendications**

1. Homopolymères et copolymères de l'acrylonitrile ayant jusqu'à 30% en poids de motifs comonomériques incorporés par polymérisation, pour lesquels des comonomères dépourvus de groupements ioniques sont seuls utilisés, caractérisés en ce qu'ils possèdent des valeurs K de 50 à 100, en ce qu'ils présentent vis-à-vis de colorants cationiques un pouvoir d'absorption des colorants d'au moins 0,5% en poids, en ce qu'ils possèdent une conductivité, mesurée sur une solution dans le diméthylformamide, d'au moins 10 μ Siemens et des teneurs en soufre fixé au polymère, dans le cas de copolymérisats, de 0,2 à 1,5 et, dans le cas d'homopolymérisats, de 0,4 à 1,2% en poids.

2. Copolymères suivant la revendication 1, caractérisés en ce qu'ils contiennent, copolymérisé, au moins l'un des monomères tels qu'un ester alkylique d'acide (méth)-acrylique, un ester de vinyle d'acides carboxyliques aliphatiques, du styrène ou du styrène substitué par des groupes alkyle, de l'anhydride d'acide maléique, des amides d'acide maléique à substituants N-alkyle.

3. Copolymères suivant les revendications 1 et 2, caractérisés en ce qu'ils contiennent jusqu'à 15% en poids de motifs comonomériques.

4. Polymères de l'acrylonitrile dépourvus de comonomères suivant la revendication 1, caractérisés en ce qu'ils possèdent des valeurs K de 60—90, une conductivité mesurée sur une solution dans le diméthylformamide de $>15$ μ Siemens et des teneurs en soufre fixé au polymère de 0,4—1,2% en poids.

5. Polymères suivant les revendications 1 à 4, caractérisés en ce qu'ils ont un pouvoir d'absorption des colorants de 3 à 10% en poids.

6. Procédé de production de polyacrylonitrile et de copolymères contenant principalement de l'acrylonitrile, caractérisé en ce qu'on polymérise de l'acrylonitrile seul ou avec jusqu'à 30% en poids d'au moins un comonomère à nonsaturation éthylénique, parmi lesquels on n'utilise que des comonomères dépourvus de groupements ioniques, à des températures de 0 à 60° C, éventuellement sous pression, dans un hydrocarbure aliphatique ayant un point d'ébullition entre −10 et 80° C ou dans des mélanges d'hydrocarbures aliphatiques ayant des plages d'ébullition entre −10 et 80° C, en utilisant un système d'amorçage qui est constitué par 0,1 à 8,0 moles % d'anhydride sulfureux, 0,1 à 2,0 moles % d'un hydroperoxyde soluble dans le milieu réactionnel ainsi que 0,01 à 1,0 mole % d'un acide soluble dans le système réactionnel (dans chaque cas par rapport à la quantité utilisée de monomère), le rapport molaire de $SO_2$ à l'hydroperoxyde s'élevant alors de 1 : 1 à 6 : 1, jusqu'à des degrés de réaction de 40 à 95% en poids.

7. Procédé suivant la revendication 6, caractérisé en ce qu'on copolymérise comme comonomères à non-saturation éthylénique des esters alkyliques d'acide (méth)-acrylique, des esters de vinyle d'acides carboxyliques aliphatiques, du styrène ou du styrène substitué par des groupes alkyle, de l'anhydride d'acide maléique ou des imides d'acide maléique à substituants N-alkyle.

8. Procédé suivant les revendications 6 et 7, caractérisé en ce qu'on utilise comme comonomères de l'anhydride d'acide maléique ou des imides d'acide maléique à substituants N-alkyle en association avec du styrène dans des rapports molaires de 1 : 1 à 1 : 4.

9. Procédé suivant les revendications 6 à 8, caractérisé en ce que les comonomères à non-saturation éthylénique sont copolymérisés en quantités allant jusqu'à 15% en poids par rapport à l'acrylonitrile utilisé.

10. Procédé suivant les revendications 6 à 9, caractérisé en ce qu'on utilise comme hydroperoxydes l'hydroperoxyde de tertio-butyle et/ou l'hydroperoxyde de cumène.

11. Procédé suivant les revendications 6 à 10, caractérisé en ce qu'on utilise comme acides solubles dans le système, des acides carboxyliques partiellement halogénés ou perhalogénés ayant jusqu'à 10 atomes de carbone.